# EUROPÄISCHE PATENTSCHRIFT

(11) **EP 0 986 687 B1**
(45) Veröffentlichungstag und Bekanntmachung des Hinweises auf die Patenterteilung: **14.04.2004**
(21) Anmeldenummer: 98938601.6
(22) Anmeldetag: 04.06.1998
(51) Int. Cl.: E05D 7/02, H02B 1/38

(54) **VERSTELLBARES SCHARNIER FÜR EINEN SCHALTSCHRANK**
ADJUSTABLE HINGE FOR A SWITCH CUPBOARD
CHARNIERE DEPLACABLE POUR ARMOIRE DE DISTRIBUTION

(30) Priorität: 05.06.1997 DE 19723555
(43) Veröffentlichungstag der Anmeldung: 22.03.2000
(73) Patentinhaber: Rittal-Werk Rudolf Loh GmbH & Co. KG, 35745 Herborn (DE)
(72) Erfinder: KÖHLER, Martina, D-35745 Herborn (DE); NEUHOF, Markus, D-35630 Ehringshausen (DE)
(74) Vertreter: Fleck, Hermann-Josef, Dr.-Ing.
(86) Internationale Anmeldenummer: PCT/EP1998/003331
(87) Internationale Veröffentlichungsnummer: WO 1998/055720

(56) Entgegenhaltungen:
- EP-A- 0 157 344
- DE-A- 19 711 636
- DE-C- 286 632
- DE-U- 29 507 001
- GB-A- 2 122 679
- US-A- 2 408 071

## Beschreibung

Die Erfindung betrifft einen Schaltschrank mit einem Korpus und einer Schranktüre, die mittels Scharnieren am Korpus anlenkbar ist, wobei ein erstes Scharnierteil an der Schranktüre oder am Korpus und ein zweites Scharnier an dem Korpus oder der Schranktüre befestigbar ist, wobei die Scharnierteile mittels Scharnierbolzen miteinander verbindbar sind, die in Lageraugen der ersten Scharnierteile und Lageraufnahmen der zweiten Scharnierteile einführbar sind und wobei die Scharniertüre mit linker oder rechter Anschlagart am Korpus in unterschiedlichen Haltepositionen anlenkbar ist.

Ein Schaltschrank mit einer anlenkbaren Schranktüre dieser Art ist aus der GB-A 2 122 679 bekannt. Dabei greifen die ersten und zweiten Scharnierteile mit ihren Lageraugen und Lageraufnahmen mit axialem Verstellspiel ineinander und können somit in der Scharnierachse in zwei Haltepositionen zueinander gebracht werden, wobei mit Unterlegscheiben das Verstellspiel ausgeglichen wird. Auf diese Weise ist es möglich, die Schranktüre angehoben oder abgesenkt am Korpus anzulenken.

Bei diesem bekannten Schaltschrank tritt jedoch beim Aufstellen auf einer festen Standfläche ein ganz neues Problem auf, wenn die Schranktüre wahlweise links oder rechts am Korpus angeschlagen werden soll und dabei in beiden Fällen gewährleistet sein muss, dass die Unterkante der Schranktüre einen Abstand zur Standfläche aufweisen muss. Dies bedingt, dass die Schranktüre um ein bestimmtes Maß kleiner gestaltet sein muss als der Korpus. Dies hat zur Folge, dass die horizontalen Mittelebenen von Schranktüre und Korpus in den Anschlagpositionen um dieses Maß gegeneinander versetzt sind.

Aus der EP 01 57 43 44 B1 ist auch bekannt, die Schranktüre mittels aus einem ersten und einem zweiten Scharnierteil bestehende Scharniere am Kropus anzulenken. Die Scharnierteile sind an einer Seite des Korpus angebracht und symmetrisch und quer zur Scharnierachse verlaufenden Mittelebenen des Schaltschrankes angeordnet. Die Schranktüre erstreckt sich nahezu über die gesamte Vorderseite des Schaltschrankes. Lediglich im Bodenbereich ist ein Spalt belassen, damit die Schranktüre auf der Standfläche aufsitzt. Aufgrund dieses Spaltes ist die quer zur Scharnierachse verlaufende Schranktüre-Mittelebene zu der Mittelebene des Schaltschrankes versetzt. Infolge dieser Verhältnisse kann die Schranktüre nicht ohne weiteres wahlweise links oder rechts angeschlagen werden. Dies ist nur durch einen Austausch der Scharnierteile möglich.

Es ist Aufgabe der Erfindung bei einem Schaltschrank der eingangs erwähnten Art, die Schranktüre wahlweise links oder rechts am Korpus anschlagen zu können, ohne Scharnierteile auswechseln zu müssen und dennoch in beiden Anschlagarten den Abstand der Unterkante der Schranktüre zur Standfläche einhalten zu können.

Diese Aufgabe der Erfindung wird dadurch gelöst, dass die horizontalen Mittelebenen des Korpus und der Schranktüre in den Anschlagarten um ein vorgebebenes Maß gegeneinander versetzt sind, dass die ersten Scharnierteile symmetrisch zur Mittelebene an der Schranktüre oder an dem Korpus fest angebracht sind und dass die zweiten Scharnierteile um das doppelte, vorgegebene Maß verstellbar an dem Korpus oder der Schranktüre in den zwei Haltepositionen befestig bar sind, wobei die zweiten Scharnierteile symmetrisch zur Mittelebene des Korpus oder Schranktüre stehen.

Mit dieser Verstellbarkeit der zweiten Scharnierteile wird auf einfache Weise die Aufgabe der Erfindung gelöst. Die gewählte Anbringung der zweiten Scharnierteile bestimmt die Anschlagart, die am Einsatzsort des Schaltschrankes bei Bedarf leicht verändert werden kann, um die Aufstellverhältnisse berücksichtigen zu können und ein störungsfreies Öffnen und Schliessen der Schranktüre sicherzustellen.

Eine mögliche Variante der Erfindung ist dadurch gekennzeichnet, dass das zweite Scharnierteil zwei die Haltepositionen bestimmende Befestigungsaufnahmen aufweist, mittels derer es am Korpus bzw. an der Schranktür befestigbar ist.

Insbesondere kann es dabei vorgesehen sein, daß die Befestigungen als Bohrungen ausgebildet sind, die in einen Halter eingebracht sind, und daß der Korpus bzw. die Schranktüre Schraubaufnahmen aufweist, die fluchtend zu den Bohrungen anordenbar sind. Es kann also alleine durch die versetzten Befestigungsmöglichkeiten ein Höhenausgleich in Richtung der Scharnierachse bewerkstelligt werden. Eine andere Ausgleichsmöglichkeit wird dann geschaffen, wenn vorgesehen ist, daß die Scharnierteile in Achsrichtung des Scharnieres gegeneinander verstellbar sind. Damit kann innerhalb des Scharnieres durch einen Versatz der beiden Scharnierteile gegeneinander der Symmetrieausgleich sichergestellt werden.

Hierbei kann es beispielsweise vorteilhafterweise vorgesehen sein, daß eines der Scharnierteile zwei Lageraufnahmen zur Aufnahme eines oder zweier Scharnierbolzen aufweist, daß die Lageraufnahmen in Achsrichtung des Scharnieres voneinander beabstandet sind, daß das andere Scharnierteil ein Lagerauge hat, welches mit dem/den Scharnierbolzen im Bereich zwischen den Lageraufnahmen gehalten ist, und daß das Lagerauge zwischen den beiden Lageraufnahmen in Achsrichtung des Scharnieres versetzbar ist.

Um das Lagerauge in der jeweiligen Halteposition festlegen zu können, kann ein Distanzelement verwendet sein, das zwischen den beiden Lageraufnahmen gehalten ist.

Üblicherweise wird die, sich an die Scharnierseite anschließende Seite des Schaltschrankes mit einem Wandelement verkleidet. Wenn nun an dem, am Korpus befestigten zweiten Scharnierteil eine Halterung für die Seitenwand angebracht ist, dann werden keine zusätzlichen Befestigungselemente mehr benötigt. Hierdurch läßt sich der Teileaufwand reduzieren.

Die Erfindung wird im folgenden anhand von in den Zeichnungen dargestellten Ausführungsbeispielen näher erläutert. Es zeigen:
- Fig. 1: in perspektivischer Darstellung ein Rahmengestell für einen Schaltschrank und eine Schranktür,
- Fig. 2: in schematischer Darstellung ein Schaltschrank in Frontansicht und zwei Schranktüren,
- Fig.3a u.3b: ein Scharnier zur Anbringung der Schranktür an dem Schaltschrank,
- Fig.4: eine zu den Fig. 3a und 3b verschiedene Variante eines Scharnieres und
- Fig. 5: eine Weiterbildung des Scharnieres gemäß Fig. 4.

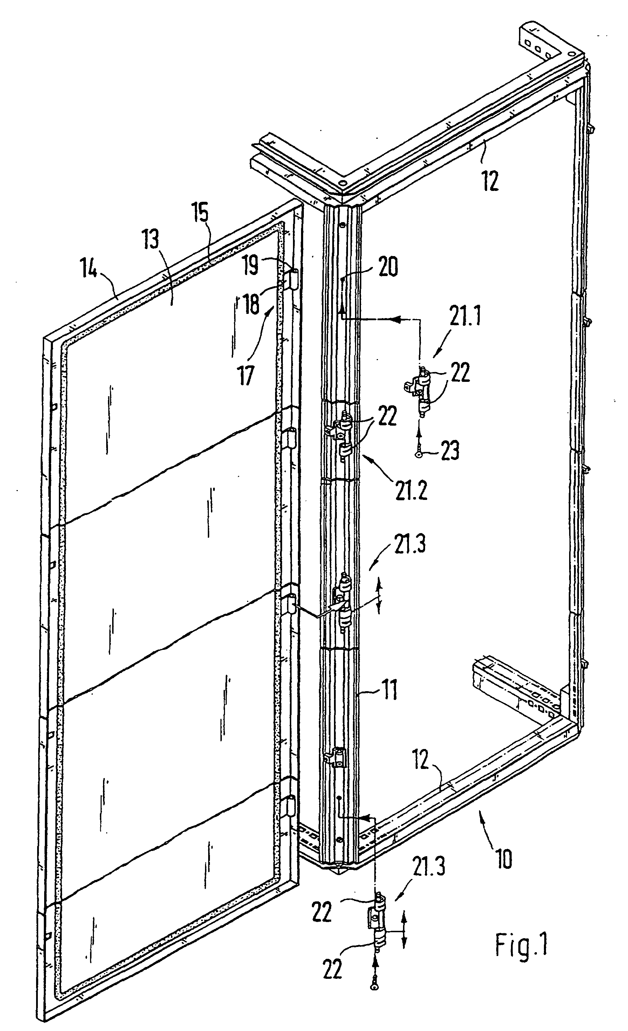

In der Fig. 1 ist ein Korpus 10 eines Schaltschrankes dargestellt, der als Rahmengestell ausgebildet ist. Dieses Rahmengestell wird von vertikalen 11 und horizontalen Rahmenprofilen 12 gebildet. An dem linken vertikalen Rahmenprofil 11 kann eine Schranktür 13 anscharniert werden. Auf der Innenseite der Schranktür 13 ist eine umlaufende Dichtung 15 aufgebracht. Diese dichtet an den Rahmenprofilen 11,12 ab.

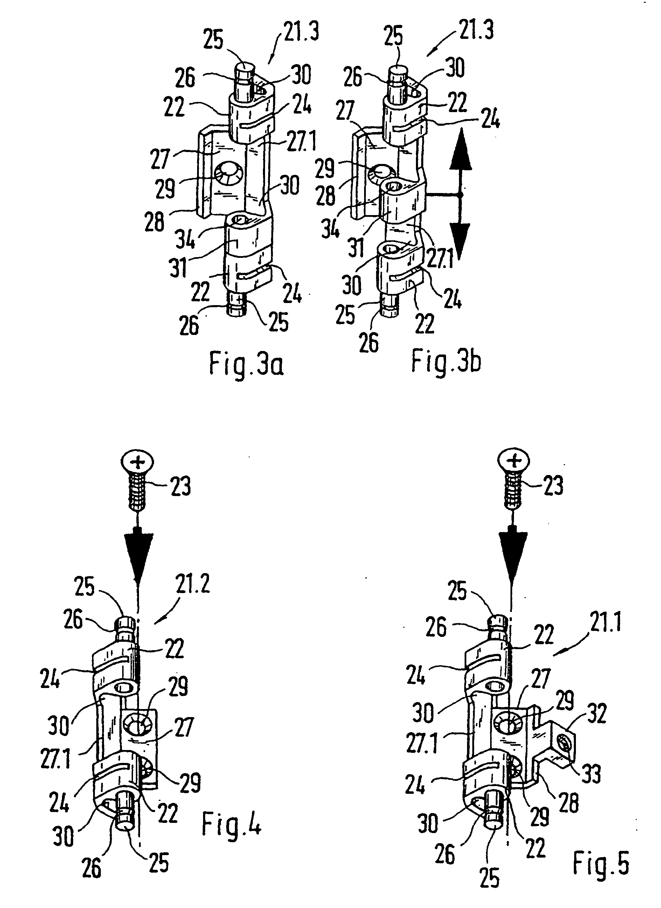

Zur Anscharnierung der Schranktüre 13 an den Korpus 10 sind vier Scharniere verwendet. Zu Demonstrationszwecken sind unterschiedliche, erfindungsgemäße Scharniere gezeigt. Üblicherweise werden jedoch gleiche Scharniere eingesetzt. Auf die Ausgestaltung der einzelnen Scharniere wird im einzelnen später, in der Erläuterung zu den Fig. 3 bis 5 eingegangen.

Die Schranktür 13 kann sowohl links als auch rechts am Korpus 10 anscharniert werden.

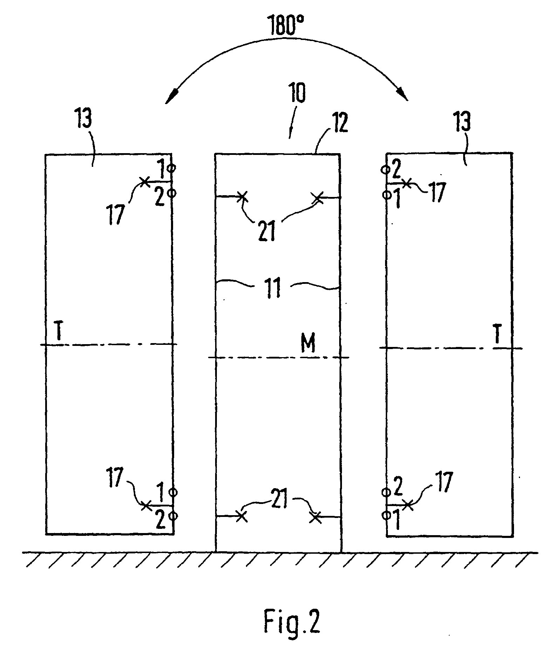

In der Fig. 2 sind schematisch diese beiden Anscharnierungs-Möglichkeiten gezeigt. Wie aus dieser Darstellung hervorgeht, sind erste Scharnierteile 21 der Scharniere symmetrisch zu der quer zur Scharnierachse verlaufenden Mittelebene M des Schaltschrankes angeordnet. Zweite Scharnierteile 17 des Scharnieres hingegen sind symmetrisch zu der quer zur Scharnierachse verlaufenden Symmetrieebene der Schranktüre 13 auf der Schranktüre 13 fixiert. Die Fixierungspunkte sowohl auf der Schranktüre 13 als auch auf dem Schaltschrank sind mit Kreuzen markiert. Damit die Schranktür 13 ungehindert auf und zu geschwenkt werden kann, ist ein Freiraum zwischen der horizontalen Unterkante der Schranktüre 13 und dem Boden belassen. Mit diesem Freiraum ist die Schranktüre 13 weniger hoch als der Schaltschrank selbst. Infolge dieser Symmetrieverhältnisse ist die Mittelebene M des Schaltschrankes versetzt zu der Symmetrieachse der Schranktüre 13 angeordnet.

Jedes zweite Scharnierteil 17 besitzt nun zwei Haltepositionen, die in der Fig. 2 mit 1 und 2 bezeichnet sind. Zur Anscharnierung der links dargestellten Schranktüre 13 an der linken Seite des Schaltschrankes wird das zweite Scharnierteil 17 in der Halteposition -2- angebunden.

Soll nun ein Wechsel der Anschlagart vorgenommen werden, so muß die Schranktüre um 180°geschwenkt auf die rechte Seite des Schaltschrankes gebracht werden. Diese Vorgehensweise ist mit dem Doppelpfeil in der Fig. 2 dargestellt. Um die Symmetrieverhältnisse beibehalten zu können, kommt nun die andere Halteposition -1- des zweiten Scharnierteiles 17 zum Einsatz. An dieser wird die Schranktüre 13 an dem ersten Scharnierteil 21 festgemacht.

Die beiden Haltepositionen 1-2 lassen sich nun auf unterschiedliche Weise verwirklichen. In den Fig. 3 bis 5 sind einige mögliche Varianten dargestellt.

Die Fig. 3a zeigt ein Scharnierteil 21.3, das entweder am Schaltschrank oder an der Schranktüre 13 angebracht werden kann. Zur Befestigung, beispielsweise an dem Rahmengestell eines Schaltschrankes, ist in einen Halter 27 verwendet, der eine Befestigung 29 aufweist. Im vorliegenden Falle ist ein plattenartigen Halter 27 eine Durchgangsbohrung als Befestigung 29 eingebracht. An den Halter 27 ist winklig ein Steg 28 angeschlossen. Mit diesem Steg 28 läßt sich der Halter 27 an dem Korpus 10 des Schaltschrankes ausrichten. An der dem Steg 28 abge-kehrten Seite geht der Halter 27 in ein Abwinklung 27.1 über. Die Abwinklung 27.1 trägt zwei Lageraufnahmen 22, die zueinander beabstandet angeordnet sind. Die Lageraufnahmen 22 nehmen jeweils einen Scharnierbolzen 25 auf. Die beiden Scharnierbolzen 25 sind fluchtend zueinander in den Lageraufnahmen 22 gehalten. Die Mittellängsachse der Scharnierbolzen 25 bildet die Scharnier-achse. Die Scharnierbolzen 25 sind jeweils mit zwei umlaufenden Nuten 26 versehen. In der Darstellung gemäß der Fig. 3A ist nur eine der umlaufenden Nuten 26 erkennbar. Die andere ist durch die Lageraufnahme 22 verdeckt. In einer Federaufnahme 24 der Lageraufnahme 22 ist eine Feder gehalten. Diese rastet, in die nicht einsehbare Nut 26, ein.

Im Bereich zwischen den beiden Lageraufnahmen 22 ist ein Distanzelement 31 angeordnet. Der verbleibende Freiraum zwischen den beiden Lageraufnahmen 22 kann mit einem Lagerauge 19 des ersten Scharnierteiles 17, wie dieses der Fig. 1 entnehmbar ist, ausgefüllt werden. Zur Fixierung sowohl des Lagerauges 19 als auch des Distanzelementes 31 zwischen den beiden Lageraufnahmen 22 wird der Lagerbolzen 25 durch eine Bohrung 34 des Distanzelementes 31 in das Lagerauge 19 eingeschoben. Im eingeschobenen Zustand verrastet das Federelement der Lageraufnahme 22 mit der zweiten umlaufenden Nut 26 des Lagerbolzens 25.

Wie sich der Fig. 3b entnehmen läßt, kann das Distanzelement 31 zwischen den beiden Lageraufnahmen 22 verschoben werden. Dabei kann es aus seiner ersten Position, die in der Fig. 3a gekennzeichnet ist, in eine zweite Position gebracht werden, wobei es an der oberen Lageraufnahme 22 anliegt. Es ist ersichtlich, daß mit dem Distanzelement 31 die beiden Haltepositionen, wie sie in der Fig. 2 erläutert worden sind, verwirklicht werden können.

Üblicherweise werden die Scharnierteile 21.3 einstückig hergestellt. Dabei kann auch das Distanzelement 31 fest mit dem Scharnierteil 21.3 verbunden sein. Die Anbindung erfolgt dabei über eine Sollbruchstelle. Das Distanzelement 31 kann dann abgebrochen und in die jeweilige Bestimmungsposition gebracht werden.

In der Fig. 4 ist eine Variante eines Scharnierteiles 21.2 dargestellt, mit der die beiden unterschiedlichen Haltepositionen verwirklicht werden können. Das Scharnierteil 21.2 ist in seiner Funktion im wesentlichen ähnlich mit dem Scharnierteil 21.3, wie es in den Fig. 3a und 3b beschrieben wurde. Ein Unterschied besteht darin, daß die Lageraufnahmen 22 nur so weit voneinander beabstandet sind, daß das Lagerauge 19 Platz findet. In den Halter 27 sind zwei Befestigungen 29 (hier Durchgangsbohrungen) eingebracht. Diese beiden Befestigungen 29 sind in Richtung der Scharnierachse beabstandet, so daß zwei Haltepositionen gebildet sind. Mittels dieser kann die Schranktüre 13 an dem Korpus 10 an zwei beabstandeten Stellungen festgemacht werden.

Die Fig. 5 zeigt ein Scharnierteil 21.1, das eine Weiterbildung des Scharnierteiles 21.2 gemäß der Fig. 4 ist. Demgemäß ist an den Halter 27 ein Steg 28 angeformt, mittels dem wiederum der Halter 27 an dem Schaltschrank ausgerichtet werden kann. Der Steg 28 trägt eine Seitenwand-Halterung 32. Die Seitenwand-Halterung 32 ist mit einer Gewindeaufnahme versehen, an der eine Seitenwand angeschraubt werden kann.

Die Scharnierteile 21.1, 21.2, 21.3 halten die Lageraufnahmen 22 unter Bildung eines Freiraumes 30 versetzt zu der Abwinklung 27.1. In dem Freiraum 30 kann bei aufgeschwenkter Schranktüre eine umlaufende Abkantung 14 der Schranktüre 13 aufgenommen werden. Die Abkantung 14 läßt sich der Fig. 1 entnehmen. Damit stellt der Freiraum 30 sicher, daß die Schranktüre 13 ausreichend weit aufgeschwenkt werden kann.

Die Fixierung der in den Fig. 3a bis 5 dargestellten Scharnierteile 21.1,21.2, 21.3 erfolgt mittels Befestigungsschrauben 23, die durch die Befestigungen 29 hindurchgeführt und in Befestigungsaufnahmen 20 des Korpusses eingeschraubt werden können, wie dies die Fig. 1 veranschaulicht.

## Patentansprüche

1. Schaltschrank mit einem Korpus (10) und einer Schranktüre (13), die mittels Scharnieren am Korpus (10) anlenkbar ist, wobei ein erstes Scharnierteil (17) an der Schranktüre (13) oder am Korpus (10) und ein zweites Scharnier (21, 21.1, 21.2, 21.3) an dem Korpus (10) oder der Schranktüre (13) befestigbar ist, wobei die Scharnierteile (17, 21.1, 21.2, 21.3) mittels Scharnierbolzen (25) miteinander verbindbar sind, die in Lageraugen (19) der ersten Scharnierteile (17) und Lageraufnahmen (22) der zweiten Scharnierteile (21, 21.1, 21.2, 21.3) einführbar sind und wobei die Scharniertüre (13) mit linker oder rechter Anschlagart am Korpus (10) in unterschiedlichen Haltepositionen anlenkbar ist,
**dadurch gekennzeichnet,**
**dass** die horizontalen Mittelebenen (M, T) des Korpus (10) und der Schranktüre (13) in den Anschlagarten um ein vorgegebenes Maß gegeneinander versetzt sind,
**dass** die ersten Scharnierteile (17) symmetrisch zur Mittelebene (T oder M) an der Schranktüre (13) oder an dem Korpus (10) fest angebracht sind und
**dass** die zweiten Scharnierteile (21, 21.1, 21.2, 21.3) um das doppelte, vorgegebene Maß verstellbar an dem Korpus (10) oder der Schranktüre (13) in den zwei Haltepositionen befestigbar sind, wobei die zweiten Scharnierteile (21, 21.1, 21.2, 21.3) symmetrisch zur Mittelebene (M oder T) des Korpus (10) oder der Schranktüre (13) stehen.

2. Schaltschrank nach Anspruch 1,
**dadurch gekennzeichnet,**
**dass** das zweite Scharnierteil (21) zwei die Haltepositionen bestimmende Befestigungen (29) aufweist.

3. Schaltschrank nach Anspruch 2,
**dadurch gekennzeichnet,**
**dass** die Befestigungen (2a) als Bohrungen in einem Halter (27) eingebracht sind.

4. Schaltschrank nach einem der Ansprüche 1 bis 3,
**dadurch gekennzeichnet,**
**dass** eines der Scharnierteile (17,21) zwei Lageraufnahmen (22) zur Aufnahme eines oder zweier Scharnierbolzen (25) aufweist,
**dass** die Lageraufnahmen (22) in Achsrichtung des Scharniers voneinander beabstandet sind,
**dass** das andere Scharnierteil (21,17) ein Lagerauge (19) hat, welches mit dem/den Scharnierbolzen (25) im Bereich zwischen den Lageraufnahmen (22) gehalten ist, und
**dass** das Lagerauge (19) zwischen den beiden Lageraufnahmen (25) in Achsrichtung des Scharniers versetzbar ist.

5. Schaltschrank nach Anspruch 4,
**dadurch gekennzeichnet,**
**dass** zusätzlich zu dem Lagerauge (19) des Scharnierteils (21,17) ein Distanzelement (31) zwischen den beiden Lageraufnahmen (25) gehalten ist.

6. Schaltschrank nach einem der Ansprüche 1 bis 5,
**dadurch gekennzeichnet,**
**dass** bei Befestigung des zweiten Scharnierteils (21, 21.1, 21.2, 21.3) an dem Korpus (10) eine Seitenwand-Halterung (32) am Scharnierteil vorgesehen ist, an der ein Wandelement befestigbar ist.

## Claims

1. Switch cabinet with a basic structure (10) and a cabinet door (13), which can be articulated on the basic structure (10) by means of hinges, it being the case that a first hinge part (17) can be fastened on the cabinet door (13) or on the basic structure (10) and a second hinge part (21, 21.1, 21.2, 21.3) can be fastened on the basic structure (10) or the cabinet door (13), that the hinge parts (17, 21.1, 21.2, 21.3) can be connected to one another by means of hinge pins (25) which can be introduced into bearing eyelets (19) of the first hinge parts (17) and bearing mounts (22) of the second hinge parts (21, 21.1, 21.2, 21.3), and that the cabinet door (13) can be articulated in different retaining positions on the basic structure (10) with left-hand or right-hand hinge mounting, **characterized in that** the horizontal centre planes (M, T) of the basic structure (10) and of the cabinet door (13) are offset in relation to one another by a predetermined amount for the different types of hinge mounting, **in that** the first hinge parts (17) are fixed on the cabinet door (13) or on the basic structure (10) symmetrically to the centre plane (T or M), and **in that** the second hinge parts (21, 21.1, 21.2, 21.3) can be fastened in the two retaining positions on the basic structure (10) or the cabinet door (13) such that they can be adjusted by double the predetermined amount, the second hinge parts (21, 21.1, 21.2, 21.3) being symmetrical to the centre plane (M or T) of the basic structure (10) or of the cabinet door (13).

2. Switch cabinet according to Claim 1, **characterized in that** the second hinge part (21) has two fastenings (21) which determine the retaining positions.

3. Switch cabinet according to Claim 2, **characterized in that** the fastenings (2a) are made as bores in a holder (27).

4. Switch cabinet according to one of Claims 1 to 3, **characterized in that** one of the hinge parts (17, 21) has two bearing mounts (22) for accommodating one or two hinge pins (25), **in that** the bearing mounts (22) are spaced apart from one another in the axial direction of the hinge, **in that** the other hinge part (21, 17) has a bearing eyelet (19) which is retained in the region between the bearing mounts (22) by the hinge pin or pins (25), and **in that** the bearing eyelet (19) can be offset in the axial direction of the hinge between the two bearing mounts (22).

5. Switch cabinet according to Claim 4, **characterized in that**, in addition to the bearing eyelet (19) of the hinge part (21, 17), a spacer element (31) is retained between the two bearing mounts (22).

6. Switch cabinet according to one of Claims 1 to 5, **characterized in that**, when the second hinge part (21, 21.1, 21.2, 21.3) is fastened on the basic structure (10), a side-wall securing means (32) is provided on the hinge part, and a wall element can be fastened on this securing means.

## Revendications

1. Armoire de commande comportant un corps (10) et une porte (13) d'armoire, laquelle peut être articulée sur le corps (10) au moyen de charnières, une première partie de charnière (17) pouvant être fixée à la porte (13) d'armoire ou au corps (10) et une seconde partie de charnière (21, 21.1, 21.2, 21.3) pouvant être fixée au corps (10) ou à la porte (13) d'armoire, les parties de charnière (17, 21.1, 21.2, 21.3) pouvant être reliées entre elles au moyen d'axes (25) de charnière, lesquels peuvent être introduits dans des yeux de palier (19) des premières parties de charnière (17) et dans des logements de palier (22) des secondes parties de charnière (21, 21.1, 21.2, 21.3), et la porte (13) d'armoire pouvant être articulée dans des positions de retenue différentes sur le corps (10) selon un type de montage à gauche ou à droite, **caractérisée en ce que** les plans médians horizontaux (M, T) du corps (10) et de la porte (13) d'armoire sont décalés l'un par rapport à l'autre d'une mesure prédéfinie dans les types de montage, **en ce que** les premières parties de charnière (17) sont installées de manière fixe sur la porte (13) d'armoire ou sur le corps (10) de façon symétrique au plan médian (T ou M) et **en ce que** les secondes parties de charnière (21, 21.1, 21.2, 21.3) peuvent être fixées au corps (10) ou à la porte (13) d'armoire dans deux positions de retenue de façon réglable selon la double mesure prédéfinie, les secondes parties de charnière (21, 21.1, 21.2, 21.3) étant disposées de façon symétrique aux plan médian (M ou T) du corps (10) ou de la porte (13) d'armoire.

2. Armoire de commande selon la revendication 1, **caractérisée en ce que** la seconde partie de charnière (21) présente deux fixations (29) déterminant les positions de retenue.

3. Armoire de commande selon la revendication 2, **caractérisée en ce que** les fixations (2a) sont conformées comme des trous dans une patte de fixation (27).

4. Armoire de commande selon l'une quelconque des revendications 1 à 3, **caractérisée en ce qu'**une des parties de charnière (17, 21) présente deux logements de palier (22) destinés à recevoir un ou deux axes (25) de charnière, **en ce que** les logements de palier (22) sont distants l'un de l'autre dans le sens de l'axe de la charnière, **en ce que** l'autre partie de charnière (21, 17) présente un oeil de palier (19), lequel est maintenu dans la zone entre les logements de palier (22) par l'axe ou les axes (25) de charnière, et **en ce que** l'oeil de palier (19) peut être déplacé entre les deux logements de palier (22) dans le sens de l'axe de la charnière.

5. Armoire de commande selon la revendication 4, **caractérisée en ce qu'**en plus de l'oeil de palier (19) de la partie de charnière (21, 17), un élément d'écartement (31) est maintenu entre les deux logements de palier (22).

6. Armoire de commande selon l'une quelconque des revendications 1 à 5, **caractérisée en ce que** pour la fixation de la seconde partie de charnière (21, 21.1, 21.2, 21.3) au corps (10), il est prévu une attache (32) de paroi latérale sur la partie de charnière, à laquelle un élément de paroi peut être fixé.
